# EUROPÄISCHE PATENTANMELDUNG

(11) **EP 4 206 152 A1**
(43) Veröffentlichungstag der Anmeldung: **05.07.2023**
(21) Anmeldenummer: 22213456.1
(22) Anmeldetag: 14.12.2022
(51) Int. Cl.: C03B 23/045, C03B 23/09

(54) **WERKZEUGWECHSELVORRICHTUNG FÜR EINE FORMEINRICHTUNG ZUR FORMGEBUNG VON GLASBEHÄLTERN**

(30) Priorität: 16.12.2021 DE 102021133547
(71) Anmelder: AMBEG Dr. J. Dichter GmbH, 10829 Berlin (DE)
(72) Erfinder: Langer, Matthias, 12355 Berlin (DE)
(74) Vertreter: Grünecker Patent- und Rechtsanwälte PartG mbB

(57) **Zusammenfassung**

Die Erfindung befasst sich mit der Formgebung von Glasbehältern (2), insbesondere Spritzen, Karpulen oder Injektionsfläschchen. Der Erfindung liegt die Aufgabe zugrunde, einen schnellen Werkzeugaustausch zu ermöglichen und die Produktionseffizienz zu verbessern. Dies wird erfindungsgemäß durch eine Werkzeugwechselvorrichtung (1) erreicht, die wenigstens zwei Werkzeughalteraufnahmen (14) zur Aufnahme eines jeweiligen Werkzeughalters (16) umfasst. Die wenigstens zwei Werkzeughalteraufnahmen (14) sind hierbei von wenigstens einer Bestückungs- und Entnahmestellung (18) in eine Betriebsstellung (20) beweglich, und wobei eine der wenigstens zwei Werkzeughalteraufnahmen (14) sich dann in einer Bestückungs- und Entnahmestellung (18) befindet, wenn eine andere der wenigstens zwei Werkzeughalteraufnahmen (14) in der Betriebsstellung (20) angeordnet ist. Zudem sind die wenigstens zwei Werkzeughalteraufnahmen (14) mit jeweils einer Durchstecköffnung (22) zum Durchstecken eines Führungsrohrs (10) für den Werkzeughalter (16) versehen.

## Beschreibung

Die Erfindung betrifft eine Werkzeugwechselvorrichtung und eine Formeinrichtung zur Formgebung von Glasbehältern, insbesondere von Spritzen, Karpulen und Injektionsfläschchen.

Bei der Formgebung solcher Glasbehälter wird ein offenes Ende eines Glasrohres unter Einwirkung von Wärme und Umformwerkzeugen, beispielsweise Formrollen umgeformt. Dabei wird zur Ausformung einer Innenform des Glasbehälters ein Werkzeug in das offene Ende eines Glasrohres eingesteckt.

Der Erfindung liegt die Aufgabe zugrunde, die Effizienz der Formeinrichtung, die für Formgebung von Glasbehältern verwendet wird, zu erhöhen.

Diese Aufgabe wird gelöst durch eine Werkzeugwechselvorrichtung für eine Formeinrichtung zur Formgebung von Glasbehältern, insbesondere von Spritzen, Karpulen und Injektionsfläschchen. Die Werkzeugwechselvorrichtung umfasst wenigstens zwei Werkzeughalteraufnahmen zur Aufnahme eines jeweiligen Werkzeughalters, wobei die wenigstens zwei Werkzeughalteraufnahmen von wenigstens einer Bestückungs- und Entnahmestellung in eine Betriebsstellung beweglich sind, und wobei eine der wenigstens zwei Werkzeughalteraufnahmen sich dann in einer Bestückungs- und Entnahmestellung befindet, wenn eine andere der wenigstens zwei Werkzeughalteraufnahmen in der Betriebsstellung angeordnet ist, und wobei die wenigstens zwei Werkzeughalteraufnahmen mit jeweils einer Durchstecköffnung versehen ist.

Die Aufgabe wird zudem durch einen Werkzeughalter für eine Werkzeugwechselvorrichtung gelöst. Der Werkzeughalter weist einen Schaft mit einer Aufnahme für ein Ende eines Führungsrohrs und eine der Aufnahme gegenüberliegende Halterung zur austauschbaren Befestigung eines Werkzeugs auf.

Weiterhin wird diese Aufgabe gelöst durch ein Verfahren zur Formgebung eines Glasbehälters wie eine Spritze, Karpule und Injektionsflasche, wobei ein Werkzeughalter mit einem Werkzeug zur Ausformung einer Innenform des Glasbehälters in eine Betriebsstellung und gleichzeitig ein anderer Werkzeughalter in eine Bestückungs- und Entnahmestellung bewegt wird.

Der Vorteil der obigen Lösung besteht darin, dass ein Werkzeugwechsel im laufenden Betrieb durchgeführt werden kann. Das Werkzeug wird nicht länger unmittelbar an einem Führungsrohr befestigt, sondern mittelbar über den Werkzeughalter. Während in der Betriebsposition ein Werkzeughalter mit einem Werkzeug zur Ausformung der Innenform des Glasbehälters genutzt wird, kann ein weiterer Werkzeughalter mit einem Werkzeug in der Bestückungs- und Entnahmestellung eingesetzt werden. Zum Auswechseln der Werkzeuge wird der zuvor in der Bestückungs- und Entnahmestellung eingesetzte Werkzeughalter in die Betriebsposition gebracht, wobei gleichzeitig der Werkzeughalter mit dem verschlissenen Werkzeug in die Bestückungs- und Entnahmestellung bewegt wird. Ab diesem Moment kann die Formgebung des Glasbehälters mit dem neuen Werkzeug bereits fortgesetzt werden. Das verschlissene Werkzeug im sich in der Bestückungs- und Entnahmestellung befindlichen Werkzeughalter kann demnach in aller Ruhe und ohne Einfluss auf den Formgebungsprozess ausgewechselt werden.

Der schnelle Werkzeugwechsel ist insbesondere bei der Formgebung von Glasbehältern von Vorteil, da die Werkzeuge dabei einem hohen Verschleiß ausgesetzt sind, wodurch sich deren Durchmesser verringert. Ein verschlissenes Werkzeug hat eine Änderung der Durchmesser der Innenform des Glasbehälters zur Folge, wodurch dieser nicht mehr maßhaltig ist. Bei herkömmlichen Formeinrichtung ist ein Wechsel des Werkzeugs jedoch relativ zeitaufwändig. Daher ergibt sich durch die langen Standzeiten ein hoher Produktionsverlust bei herkömmlichen Formeinrichtung, der durch die Werkzeugwechselvorrichtung vermieden werden kann.

Die obigen Lösungen können durch die folgenden, jeweils für sich vorteilhaften und beliebig miteinander kombinierbaren Merkmale weiter verbessert werden.

Die Glasbehälter können beispielsweise eine Länge bzw. Höhe von höchstens 20 cm und mehr und/oder einen Durchmesser von höchstens 6 cm aufweisen. Beispielsweise handelt es sich bei den Glasbehältern um Behälter für medizinische Produkte, wie beispielsweise Impfstoffe oder Medikamente, für kosmetische Produkte und/oder für Lebensmittel. Insbesondere Glasbehälter für medizinische Produkte unterliegen strengen Auflagen und hohen Anforderungen an die Maßhaltigkeit der Glasbehälter. Daher ist bei der Formgebung der Glasbehälter dafür Sorge zu tragen, dass die Werkzeuge diese Maßhaltigkeit zuverlässig gewährleisten.

Die Durchstecköffnung kann insbesondere zum Durchstecken eines Führungsrohrs für den Werkzeughalter ausgestaltet sein. Das Führungsrohr kann dabei gegenüber der Durchstecköffnung linear im Wesentlichen parallel zu einer axialen Richtung beweglich gehalten sein.

Für einen kompakten Bauraum der Werkzeugwechselvorrichtung ist es von Vorteil, wenn die wenigstens zwei Werkzeughalteraufnahmen an einem gemeinsamen Träger angeordnet sind. Der Träger kann vorzugsweise plattenförmig und/oder ringförmig sein. Beispielsweise kann die Werkzeugwechselvorrichtung einen in einer Drehrichtung drehbaren Werkzeugrevolver aufweisen, an dem die wenigstens zwei Werkzeughalteraufnahmen in Drehrichtung voneinander beabstandet angeordnet sind. Besonders vorteilhaft ist es, wenn der Werkzeugrevolver einen in Drehrichtung beweglichen Magazinring mit den wenigstens zwei Werkzeughalteraufnahmen aufweist. Die runde Form des Magazinrings erlaubt eine vergleichsweise besonders platzsparende Ausführung der Werkzeugwechselvorrichtung.

In einer weiteren vorteilhaften Ausgestaltung kann der Werkzeugrevolver drehbar angetrieben sein. Beispielsweise kann der Werkzeugrevolver einen Antrieb aufweisen, durch den der Magazinring um eine Drehachse des Magazinrings herum in Drehrichtung gedreht wird.

Die wenigstens zwei Werkzeughalteraufnahmen können dabei diametral zueinander angeordnet sein, so dass die wenigstens eine Bestückungs- und Entnahmestellung möglichst weit von der Betriebsstellung entfernt angeordnet ist. Zudem erlaubt die diametrale Ausgestaltung eine einfachere Automatisierung, da der Magazinring bei jedem Werkzeugwechsel im gleichen Intervall gedreht wird.

Um den Zeitpunkt des Werkzeugaustausches im Werkzeughalter flexibler zu gestalten, kann die Werkzeugwechselvorrichtung eine Mehrzahl von Werkzeughalteraufnahmen, insbesondere acht, vorzugsweise vier aufweisen. Die Werkzeughalteraufnahmen können insbesondere äquigonal, d.h. in gleichmäßigen Winkelabständen am Magazinring angeordnet sein.

Hierbei ist anzumerken, dass während eine Werkzeughalteraufnahme in der Betriebsstellung angeordnet ist, wenigstens eine der anderen Werkzeughalteraufnahmen in der Bestückungs- und Entnahmestellung angeordnet sein kann. Auch können mehrere unterschiedliche Bestückungs- und Entnahmestellungen vorgesehen sein für jede Werkzeughalteraufnahme abseits der Betriebsstellung.

Auch kann in einer Ausgestaltung die Bestückungsstellung und die Entnahmestellung voneinander getrennt sein. Beispielsweise kann um eine Rotationsposition des Magazinrings in Drehrichtung hinter der Betriebsstellung eine Entnahmestellung, in der der Werkzeughalter mit dem verschlissenen Werkzeug aus der Werkzeughaltervorrichtung entnommen wird, vorgesehen sein. Weiterhin kann eine Bestückungsstellung um eine Rotationsposition des Magazinrings in Drehrichtung hinter der Entnahmestellung angeordnet sein. Die Trennung der Entnahmestellung und der Bestückungsstellung ist insbesondere für die Automatisierung des Prozesses von Vorteil.

Beispielsweise erlaubt die Trennung einen vollautomatisierten Prozess, wobei an den entsprechenden Stellungen ein Werkzeughalter aus der Werkzeughalteraufnahme entfernt bzw. eingesetzt wird.

Zur Kopplung des Werkzeughalters mit dem Führungsrohr ist es von Vorteil, wenn die relative Rotationsposition des Werkzeughalters zum Führungsrohr festgelegt ist. Hierfür können die wenigstens zwei Werkzeughalteraufnahmen jeweils mit einem Kodierungselement zum Festlegen der Ausrichtung einer Rotationsposition des Werkzeughalters in der entsprechenden Werkzeughalteraufnahme versehen sein. Das Kodierungselement kann beispielsweise eine Kontur der Werkzeughalteraufnahme derart beeinflussen, dass diese nicht rotationssymmetrisch ist. Dies kann in einer Ausführungsform durch eine Auswölbung, einen Vorsprung oder eine Vertiefung in der radial nach innen weisenden Fläche der Werkzeughalteraufnahme erreicht werden. Der Werkzeughalter kann hierbei komplementär zur Kontur der Werkzeughalteraufnahme ausgestaltet sein, so dass der Werkzeughalter nur in einer möglichen Rotationsposition in die Werkzeughalteraufnahme eingesetzt werden kann.

In einer weiteren vorteilhaften Ausgestaltung kann die Werkzeugwechselvorrichtung einen Werkzeughalter aufweisen, der in eine der wenigstens zwei Werkzeughalteraufnahmen eingesetzt ist, wobei der Werkzeughalter aus der Werkzeughalteraufnahme herausschiebbar ist. Demzufolge kann der Werkzeughalter lose in der Werkzeughalteraufnahme eingesetzt sein, wodurch sich der Austausch des Werkzeughalters vereinfacht. Mit "lose" ist hierbei gemeint, dass der Werkzeughalter hauptsächlich, insbesondere nur, durch die Schwerkraft in der Werkzeughalteraufnahme gehalten ist. Hierfür kann die Werkzeughalteraufnahme gegenüber dem Werkzeughalter überdimensioniert sein, so dass ein Spiel von beispielsweise 1 mm in radialer Richtung zwischen Werkzeughalter und radial nach innen weisender Wand der Werkzeughalteraufnahme gebildet wird.

Der Werkzeughalter kann insbesondere im laufenden Betrieb der Formeinrichtung aus der Werkzeughalteraufnahme in einer axialen Richtung herausnehmbar eingesetzt sein. Hierbei kann die axiale Richtung im Wesentlichen parallel zur Drehachse des Magazinrings gerichtet sein.

Um den Zugang zur Aufnahme für das Führungsrohr zu erleichtern, kann der Schaft des Werkzeughalters beim in der Werkzeughalteraufnahme eingesetzten Werkzeughalter durch die Durchstecköffnung der Werkzeughalteraufnahme hindurchragen.

Der Werkzeughalter kann einen radial vom Schaft vorragenden Kopf mit einer Auflagefläche zur Auflage in der Werkzeughalteraufnahme aufweisen. Vorzugsweise kann die Halterung für das Werkzeug am Kopf angeordnet sein. Die Halterung kann beispielsweise eine Öffnung aufweisen in der das Werkzeug fixiert werden kann. Hierzu kann das Werkzeug beispielsweise durch eine oder zwei seitliche Stiftschrauben fixiert werden.

Vorzugsweise ist die Halterung, insbesondere die Öffnung der Halterung, im Wesentlichen konzentrisch zur Aufnahme angeordnet. Die Halterung und die Aufnahme können hierbei zu gegenüberliegenden Seiten hin geöffnet sein. Alternativ dazu kann die Öffnung der Halterung auch den Kopf durchragen und in der Aufnahme münden. Die konzentrische Anordnung der Halterung und der Aufnahme erlaubt es, das Werkzeug über das Führungsrohr auszurichten. Daher kann eine hohe Wechselgenauigkeit hinsichtlich der Konzentrizität zwischen Werkzeug und Glasbehälter sichergestellt werden.

Zur Kopplung des Werkzeughalters mit dem Führungsrohr kann die Aufnahme eine radial nach innen weisende Wand mit in Umfangsrichtung voneinander beabstandeten Vertiefungen, insbesondere Bohrungen aufweisen. Zu den Vertiefungen komplementäre Presskörper des Führungsrohres können in die Vertiefungen hineingedrückt werden, wodurch der Werkzeughalter sowohl kraftschlüssig als auch formschlüssig mit dem Führungsrohr verbunden ist. Die Ausgestaltungen der in Umfangsrichtung voneinander beabstandeten Vertiefungen haben gegenüber einer in Umfangsrichtung durchgehenden Nut den Vorteil, dass die Rotationslage des Werkzeughalters relativ zum Führungsrohr durch einen Formschluss in Umfangsrichtung zwischen Werkzeughalter und Führungsrohr fixiert ist.

Insbesondere die Verbindung der Ausgestaltung mit den Vertiefungen und dem Kodierungselement erleichtert den Austausch des Werkzeughalters bzw. das Einsetzen des Werkzeughalters in die Werkzeugaufnahme. Durch das Kodierungselement kann der Werkzeughalter bereits in einer vorbestimmten Rotationslage in die Werkzeughalteraufnahme eingesetzt werden. Leichte Abweichungen von der vorbestimmten Rotationslage werden bei der Kopplung zwischen Werkzeughalter und Führungsrohr automatisch ausgeglichen.

Das Werkzeug zur Ausformung der Innenform des Glasbehälters kann austauschbar in der Halterung befestigt sein. Hierbei kann das Werkzeug ein Dorn sein, durch den der Innendurchmesser und die Innenkontur des Glasbehälters, insbesondere eines Konus des Glasbehälters, ausgeformt werden kann. Soll beispielsweise ein Spritzenkonus ausgeformt werden, so kann das Werkzeug ein Formdraht sein. Das drahtförmige Werkzeug erlaubt es, einen inneren Kanal mit einem Durchmesser von wenigen Millimetern zu formen.

Die Bearbeitung der Glasbehälter erfolgt meist unter hohen Temperaturen. Darum sollte das Werkzeug warmfest sein. Das Werkzeug kann vorzugsweise aus einem Metall oder einer Metalllegierung gefertigt sein. Beispielsweise kann das Werkzeug Wolfram aufweisen, wodurch es insbesondere bei den vorherrschenden hohen Temperaturen noch relativ verschleißfest ist. Da durch die erfindungsgemäße Lösung der Wechsel des Werkzeugs beschleunigt wird, kann aber auch auf ein Werkzeug aus einem verschleißanfälligeren Werkstoff zurückgegriffen werden, ohne die Produktionseffizienz dramatisch zu verringern.

Die Erfindung betrifft auch eine Formeinrichtung zur Formgebung von Glasbehältern, insbesondere von Spritzen, Karpulen oder Injektionsfläschchen, die eine Werkzeugwechselvorrichtung in einer der oben beschriebenen Ausgestaltungen, Umformwerkzeuge zur Herstellung einer Außenform des Glasbehälters und ein Führungsrohr umfasst. Das Führungsrohr ist dabei koaxial zur Durchstecköffnung einer sich in der Betriebsstellung befindlichen Werkzeughalteraufnahme angeordnet und die Werkzeugwechselvorrichtung, insbesondere die sich in der Betriebsstellung befindliche Werkzeughalteraufnahme, ist zwischen den Umformwerkzeugen und dem Führungsrohr angeordnet. Folglich sind Umformwerkzeuge und Führungsrohr auf unterschiedlichen Seiten der Werkzeugwechselvorrichtung angeordnet.

Vorteilhafterweise ist das Führungsrohr in axialer Richtung durch die Durchstecköffnung beweglich gehalten. Insbesondere kann das Führungsrohr zwischen einer Freigabestellung, in der das Führungsrohr auf einer Seite der Werkzeugwechselvorrichtung angeordnet ist und die Werkzeugwechselvorrichtung frei beweglich ist, und einer Arbeitsstellung, in der das Führungsrohr die Durchstecköffnung der in der Betriebsstellung positionierten Werkzeughalteraufnahme durchragt, beweglich gehalten sein. Folglich kann über das Führungsrohr das am Werkzeughalter befestigte Werkzeug in die Behälteröffnung hineingesteckt werden.

Die Umformwerkzeuge können beispielsweise als sich gegenüberliegende Formrollen gestaltet sein, wobei der Glasbehälter zwischen den Formrollen gehalten ist.

Ist ein Werkzeughalter mit einem Werkzeug zum Ausformen der Innenform des Glasbehälters in der sich in der Betriebsstellung befindlichen Werkzeughalteraufnahme eingesetzt, ist der Werkzeughalter gemäß einer vorteilhaften Ausgestaltung von dem Führungsrohr aus der Werkzeughalteraufnahme herausgehoben. Demnach wird das Werkzeug erst nach Kopplung mit dem Führungsrohr zwischen die Umformwerkzeuge gehoben. Der in der Werkzeughalteraufnahme eingesetzte Werkzeughalter mit Werkzeugen ist also beabstandet von den Umformwerkzeugen, wodurch diese sich nicht gegenseitig behindern.

Das Führungsrohr kann in einer Ausgestaltung in einer zwischen Freigabestellung und Arbeitsstellung befindlichen Kopplungsstellung, in der das Führungsrohr, insbesondere ein freies Ende des Führungsrohrs, in die Aufnahme des Werkzeughalters eingeführt ist und an den Werkzeughalter ankoppelt, beweglich gehalten sein.

Vorzugsweise kann das Führungsrohr mit dem Werkzeughalter zumindest in der Arbeitsstellung starr verbunden sein, so dass eine relative Bewegung des Werkzeughalters zum Führungsrohr während des Umformprozesses ausgeschlossen werden kann. Folglich können Fehlfunktionen der Formeinrichtung, beispielsweise aufgrund von einer falschen Positionierung des Werkzeugs relativ zum zu bearbeitenden Glasbehälter, vermieden werden.

Das Führungsrohr kann beispielsweise form- und/oder kraftschlüssig mit dem Werkzeughalter verbindbar sein. In einer bevorzugten Ausführungsform kann das Führungsrohr an seinem zur Werkzeugwechselvorrichtung gewandten Ende mit einem Zentrierspanner versehen sein. Der Zentrierspanner sorgt bei der Kopplung für eine automatische konzentrische Anordnung des Werkzeughalters und des Führungsrohres. Folglich ist beim Einsetzen des Werkzeughalters in die Werkzeugaufnahme nicht mehr länger auf die genaue Positionierung des Werkzeughalters in der Werkzeughalteraufnahme zu achten. Demnach verringert sich der Aufwand beim Einsetzen des Werkzeughalters in die Werkzeughalteraufnahme, wobei zugleich eine hohe Wechselgenauigkeit des Werkzeugs hinsichtlich der Konzentrizität erreicht wird.

Aufgrund des Hubs des Zentrierspanners kann die lichte Weite der Aufnahme des Werkzeughalters gegenüber dem Zentrierspanner im entspannten Zustand überdimensioniert sein. Ist die lichte Weite der Aufnahme beispielsweise 2 mm größer gestaltet als der Außendurchmesser des Zentrierspanners im entspannten Zustand, kann der Werkzeughalter bis zu 1 mm außermittig in der Werkzeughalteraufnahme stehen, ohne mit dem Zentrierspanner zu kollidieren. Bei der Kopplung drücken die Zentrierkugeln gegen die radial nach innen weisende Innenwand der Aufnahme und richten den Werkzeughalter konzentrisch zum Zentrierspanner und damit auch zum Führungsrohr aus.

Insbesondere kann die radial nach innen weisende Innenwand der Aufnahme mit zu den Zentrierkugeln des Zentrierspanners komplementären Vertiefungen versehen sein, so dass diese eine Kopplungsanordnung bilden, die sowohl eine kraftschlüssige als auch formschlüssige Verbindung zwischen Werkzeughalter und Führungsrohr ermöglicht. Vorzugsweise kann im gekoppelten Zustand der Werkzeughalter auf einer Stirnfläche des Führungsrohrs aufliegen, so dass der Werkzeughalter nicht mehr weiter in axialer Richtung zum Führungsrohr gedrückt werden kann.

Vorzugsweise kann der Zentrierspanner dazu ausgestaltet sein, dass dieser den Werkzeughalter beim Spannen in axialer Richtung zur Auflage auf der Stirnseite bewegt. Hierfür kann der Zentrierspanner mit radial nach außen schräg in axialer Richtung von der Werkzeughalteraufnahme weg verlaufende Führungsnuten für die Zentrierkugeln versehen sein. Demnach bewegen sich die Zentrierkugeln beim Spannen nicht nur radial nach außen, sondern auch axial nach unten.

In einer weiteren Ausgestaltung kann die Formeinrichtung eine Sensoreinrichtung zum Überprüfen des Zustands des Werkzeugs aufweisen. Die Sensoreinrichtung kann insbesondere dazu ausgestaltet sein, den Zustand des Werkzeugs in der Betriebsstellung kontinuierlich zu überprüfen. Beispielsweise kann die Sensoreinrichtung einen optischen Sensor, wie z.B. eine Lichtschranke aufweisen. Mit der Sensoreinrichtung kann ein vorzeitiger Ausfall des Werkzeugs, zum Beispiel durch Abbrechen oder übermäßigen Verschleiß, einen vorzeitigen Werkzeugwechsel initiieren. Hierfür kann die Sensoreinrichtung eine Signaleinheit aufweisen, die das Signal des Sensors an eine Kontrolleinheit sendet. Die Kontrolleinheit kann dazu ausgestaltet sein, das Führungsrohr von der Arbeitsstellung in die Freigabestellung zu fahren und die Werkzeugwechselvorrichtung zu steuern, so dass eine andere Werkzeughalteraufnahme in die Betriebsstellung bewegt wird. Anschließend kann das Führungsrohr wieder in die Arbeitsstellung unter Mitnahme der Werkzeughalteraufnahme und des dort eingesetzten Werkzeugs gefahren werden.

Zusätzlich oder alternativ dazu kann die Formeinrichtung dazu ausgestaltet sein, unter manueller Eingabe und/oder automatisiert in einem festgelegten, aber variabel vorgebbaren Zeitintervall einen Werkzeugwechsel zu initiieren. Insbesondere kann der Werkzeugwechsel im laufenden Betrieb der Formeinrichtung stattfinden. Ein mit einem Werkzeug bestückter Werkzeughalter kann insbesondere in eine sich in der Bestückungs- und Entnahmestellung befindlichen Werkzeughalteraufnahme während der Formgebung des Glasbehälters eingesetzt werden.

Im Folgenden ist die Erfindung anhand eines Ausführungsbeispiels mit Bezug auf die beigefügten Zeichnungen exemplarisch näher erläutert. Dabei werden für Elemente, die einander hinsichtlich Aufbau und/oder Funktion entsprechen, dieselben Bezugszeichen verwendet.

Nach Maßgabe der obigen allgemeinen Beschreibung können einzelne Merkmale des nachstehenden Ausführungsbeispiels weggelassen werden, wenn es in einem bestimmten Anwendungsfall nicht auf den mit diesen Merkmalen verknüpften technischen Effekt ankommen sollte. Umgekehrt können auch Merkmale, die oben beschrieben sind, aber in dem nachstehenden Ausführungsbeispiel nicht enthalten sind, hinzugefügt werden, wenn es bei einer bestimmten Anwendung auf den mit diesem Merkmal verknüpften technischen Effekt ankommen sollte.

Es zeigen:
Fig. 1 eine schematische Draufsicht einer beispielhaften Ausgestaltung einer Formeinrichtung mit einer Werkzeugwechselvorrichtung;
Fig. 2 eine schematische Schnittdarstellung der in Fig. 1 gezeigten Formeinrichtung in einer Freigabestellung;
Fig. 3 eine schematische Schnittdarstellung der Formeinrichtung in einer Kopplungsstellung;
Fig. 4 eine schematische Schnittdarstellung der Formeinrichtung in einer Arbeitsstellung; und
Fig. 5 eine vergrößerte schematische Schnittdarstellung einer Kopplungsanordnung.

Zunächst wird der Aufbau einer beispielhaften Ausgestaltung einer Formeinrichtung 100 zur Formgebung von Glasbehältern 2 beschrieben.

Die Formeinrichtung 100 umfasst nur schematisch dargestellte Umformwerkzeuge 8 zur Herstellung einer Außenform des Glasbehälters 2, ein Führungsrohr 10 und eine Werkzeugwechselvorrichtung 1, wobei die Werkzeugwechselvorrichtung 1 zumindest abschnittsweise entlang einer axialen Richtung A zwischen dem Führungsrohr 10 und den Umformwerkzeugen 8 angeordnet ist.

Der Glasbehälter 2 ist ein Glasbehälter mit einem kleinen Durchmesser, beispielsweise einem Durchmesser von weniger als 5 cm. Eine Länge des Glasbehälters beträgt höchstens 20 cm. Insbesondere handelt es sich bei den Glasbehältern 2 um Behälter für medizinische Produkte, wie beispielsweise Impfstoffe oder Medikamente, für kosmetische Produkte und/oder für Lebensmittel. In den in den Figuren gezeigten Ausgestaltungen ist die Formeinrichtung zur Formgebung einer Spritze 4, insbesondere dessen Spritzenkonus 6 ausgestaltet.

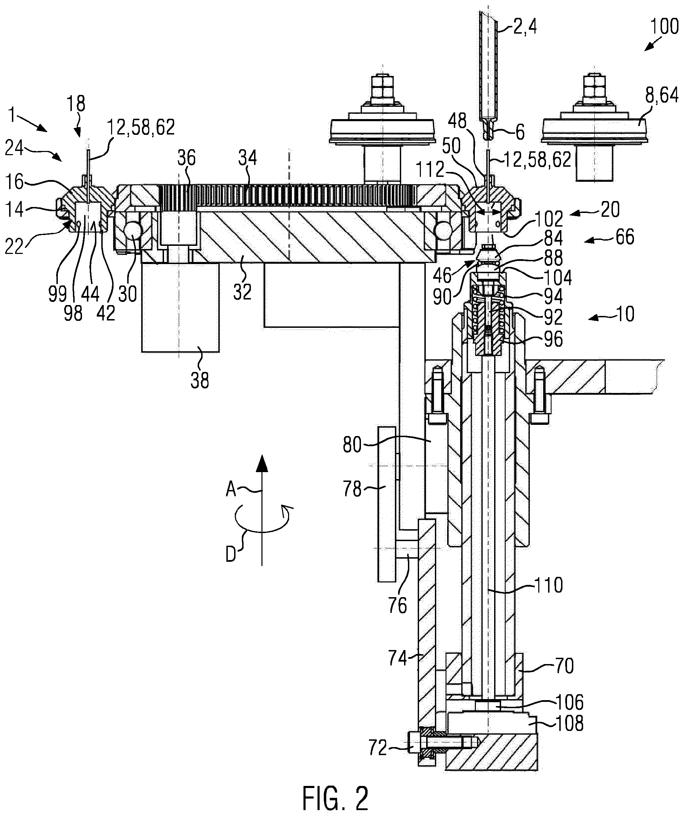

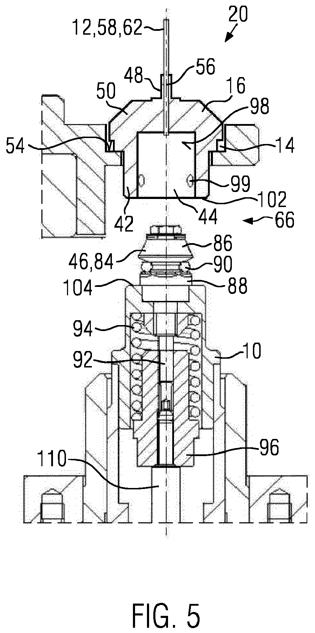

Die Werkzeugwechselvorrichtung 1 erlaubt einen schnellen Austausch eines Werkzeugs 12 zur Ausformung einer Innenform des Glasbehälters 2. Folglich können durch die Werkzeugwechselvorrichtung 1 lange Standzeiten und den damit einhergehenden Produktionsverlust vermieden werden. Hierfür weist die Werkzeugwechselvorrichtung 1 wenigstens zwei Werkzeughalteraufnahmen 14 zur Aufnahme eines jeweiligen Werkzeughalters 16 auf, wobei die wenigstens zwei Werkzeughalteraufnahmen 14 von wenigstens einer Bestückungs- und Entnahmestellung 18 in eine Betriebsstellung 20 beweglich sind. Wenn eine der wenigstens zwei Werkzeughalteraufnahmen 14 sich in der Betriebsstellung 20 befindet, dann befindet sich eine andere der wenigstens zwei Werkzeughalteraufnahmen 14 in wenigstens einer der Bestückungs- und Entnahmestellungen 18. Weiterhin sind die jeweiligen Werkzeughalteraufnahmen 14 mit jeweils einer Durchstecköffnung 22, wie sie in den Figuren 2 bis 5 zu sehen ist, zum Durchstecken des Führungsrohrs 10 versehen. Daher kann bei einem Verfahren ein Werkzeughalter 16 mit einem Werkzeug 12 zur Ausformung der Innenform des Glasbehälters 2 in die Betriebsstellung 20 bewegt werden, während gleichzeitig ein anderer Werkzeughalter 16 in eine Bestückungs- und Entnahmestellung 18 bewegt wird.

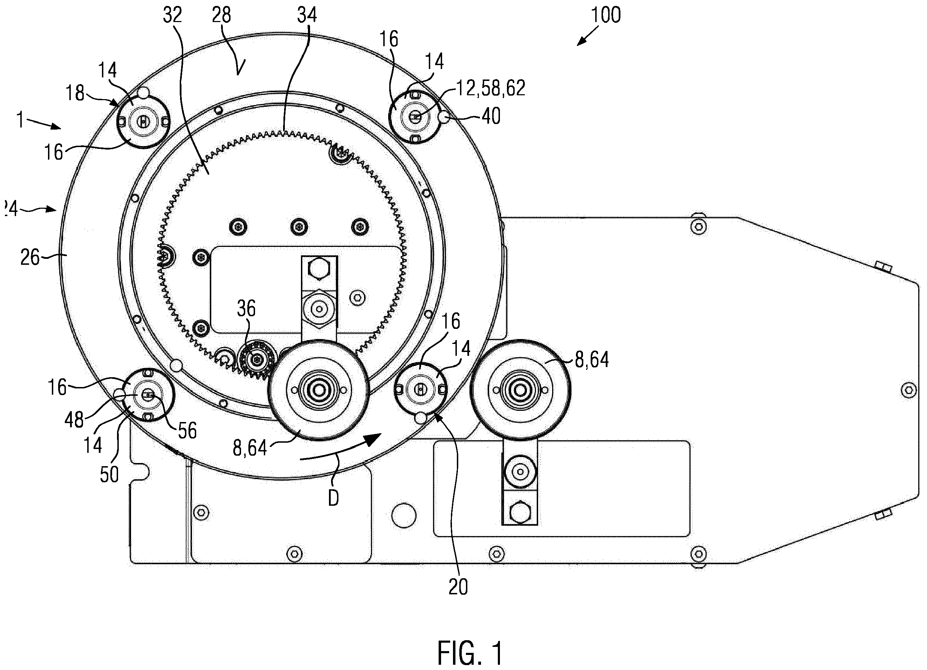

Eine besonders kompakte Bauweise der Werkzeugwechselvorrichtung 1 kann durch einen in einer Drehrichtung D um die axiale Richtung A herum drehbaren Werkzeugrevolver 24, an dem die wenigstens zwei Werkzeughalteraufnahmen 14 angeordnet sind, erreicht werden. Hierfür weist der Werkzeugrevolver 24 der Werkzeugwechselvorrichtung 1 einen als Träger für die wenigstens zwei Werkzeughalteraufnahmen 14 ausgestalteten Magazinring 26 auf. Wie in der Fig. 1 zu sehen ist, können in einer beispielhaften Ausgestaltung vier Werkzeughalteraufnahmen 14 in Drehrichtung D voneinander beabstandet am Magazinring 26 angeordnet sein. Es ist hierbei jedoch anzumerken, dass je nach Platzverhältnissen und Vorzügen eine andere Anzahl an Werkzeughalteraufnahmen 14, beispielsweise acht oder zwölf, vorgesehen sein kann.

Die Werkzeughalteraufnahmen 14 sind vorzugsweise äquigonal, d.h. in gleichmäßigen Winkelweiten, in Drehrichtung D voneinander beabstandet am Magazinring 26 verteilt. Der Magazinring 26 kann insbesondere im Wesentlichen planar ausgestaltet sein, wobei die Werkzeughalteraufnahmen 14 als Senken auf einer Flachseite 28 des Magazinrings 26 ausgestaltet sein können.

Es kann hierbei jede Werkzeughalteraufnahme 14 jenseits der Betriebsstellung 20 in einer Bestückungs- und Entnahmestellung 18 angeordnet sein. Alternativ dazu kann nur eine Bestückungs- und Entnahmestellung 18 vorgesehen sein, die vorzugsweise diametral zur Betriebsstellung 20 angeordnet ist. Auch können Bestückungs- und Entnahmestellung 18 voneinander getrennt sein. So kann beispielsweise in einer in Drehrichtung auf die Betriebsstellung 20 folgende Position die Entnahme des Werkzeughalters erfolgen und in einer in Drehrichtung D darauffolgenden Position die Bestückung der Werkzeughalteraufnahme 14 mit einem Werkzeughalter 16 erfolgen.

Der Magazinring 26 kann insbesondere in Drehrichtung D antreibbar ausgestaltet werden. So kann, wie in den Figuren gezeigt, der Magazinring 26 des Werkzeugrevolvers 24 durch ein zentrales Kugellager 30 gehalten werden, wobei das Kugellager 30 wiederum an einer Grundplatte 32, mit der die Werkzeugwechselvorrichtung 1 an die restliche Formeinrichtung 100 befestigt ist, gehalten wird. Auf einer radial innen liegenden Seite des Magazinrings 26 kann der Magazinring 26 mit einer Innenverzahnung 34 versehen sein, welcher über einen Ritzel 36 von einem Antrieb 38 angetrieben wird.

Zur Ausrichtung der Werkzeughalter 16 in den Werkzeughalteraufnahmen 14 ist es besonders vorteilhaft, wenn die Werkzeughalteraufnahmen 14 mit einem Kodierungselement 40 versehen sind. Das Kodierungselement 40 kann hierbei dafür Sorge tragen, dass der Werkzeughalter 16 nur in einer vorbestimmten Rotationsposition relativ zur Werkzeughalteraufnahme 14 in die Werkzeughalteraufnahme 14 eingesetzt werden kann, bzw. dass sich der in die Werkzeughalteraufnahme 14 eingesetzte Werkzeughalter 16 nicht relativ zur Werkzeughalteraufnahme 14 dreht. Dies kann z.B. erreicht werden, indem die Werkzeughalteraufnahme 14 nicht rotationssymmetrisch ist und die Werkzeughalter 16 komplementär zur Werkzeughalteraufnahme 14 ausgestaltet sind.

Die sich in der Betriebsstellung 20 befindliche Werkzeughalteraufnahme 14 kann, wie am besten in den Figuren 2 bis 4 zu sehen ist, in axialer Richtung A zwischen den Umformwerkzeugen 8 und dem Führungsrohr 10 angeordnet sein. Hierbei kann die Durchstecköffnung 22 im Wesentlichen konzentrisch zum Führungsrohr 10 angeordnet sein.

In jeder Werkzeughalteraufnahme 14 kann jeweils ein Werkzeughalter 16 eingesetzt sein. Der Werkzeughalter 16 weist einen Schaft 42 mit einer Aufnahme 44 für ein Ende 46 des Führungsrohrs 10 und eine der Aufnahme gegenüberliegende Halterung 48 zur austauschbaren Befestigung des Werkzeugs 12 auf.

Die Aufnahme 44 kann insbesondere in Richtung zum Führungsrohr 10 geöffnet sein. Um den Zugang zur Aufnahme 44 für das Führungsrohr 10 zu erleichtern, kann der Schaft 42 des Werkzeughalters 16 beim in der Werkzeughalteraufnahme 14 eingesetzten Werkzeughalter 16 durch die Durchstecköffnung 22 der Werkzeughalteraufnahme 14 hindurchragen.

Der Werkzeughalter 16 kann einen radial vom Schaft 42 vorragenden Kopf 50 mit einer Auflagefläche 52 zur axialen Auflage auf einer die Durchstecköffnung 22 umrahmenden Gegenfläche 54 der Werkzeughalteraufnahme 14 aufweisen. Vorzugsweise kann die Halterung 48 für das Werkzeug 12 am Kopf 50 angeordnet sein. Die Halterung 48 ist mit einer Öffnung 56 für das Werkzeug 12 versehen. Das Werkzeug 12 kann folglich in die Öffnung 56 hineingesteckt werden und beispielsweise durch eine Stiftschraube (nicht gezeigt) seitlich befestigt werden. Wie in der beispielhaften Ausgestaltung gezeigt ist, kann in jedem Werkzeughalter 16 ein im Wesentlichen baugleiches Werkzeug 12 fixiert sein.

Die Öffnung 56 der Halterung 48 ist im Wesentlichen konzentrisch zur Aufnahme 44 angeordnet. Die konzentrische Anordnung der Halterung 48 und der Aufnahme 44 erlaubt es, das Werkzeug 12 über das Führungsrohr 10 auszurichten. Daher kann eine hohe Wechselgenauigkeit hinsichtlich der Konzentrizität zwischen Werkzeug 12 und Glasbehälter 2 sichergestellt werden.

Vorzugsweise ist ein Spiel in radialer Richtung zwischen Werkzeughalter 16 und Werkzeughalteraufnahme 14 vorgesehen, wodurch das Einsetzen und Herausnehmen des Werkzeughalters 16 vereinfacht wird. Dementsprechend können die Werkzeughalter lose in der jeweiligen Werkzeughalteraufnahme 14 eingesetzt sein. Insbesondere können Werkzeughalter 16 und Werkzeughalteraufnahme 14 derart ausgestaltet sein, dass der Werkzeughalter 16 hauptsächlich oder gar lediglich durch die Schwerkraft in der Werkzeughalteraufnahme 14 gehalten ist.

Das Werkzeug 12 zur Ausformung der Innenform des Glasbehälters 2 ist austauschbar in der Halterung 48 befestigt. In der beispielhaften Ausgestaltung ist das Werkzeug 12 ein Dorn 58, durch den ein Innendurchmesser und eine Innenkontur des Glasbehälters 2, insbesondere eines Konus des Glasbehälters 2 ausgeformt werden kann. Soll, wie beispielsweise in den Figuren dargestellt, ein Spritzenkonus 6 ausgeformt werden, so kann das Werkzeug 12 ein Formdraht 62 sein. Das drahtförmige Werkzeug erlaubt es, einen inneren Kanal mit einem Durchmesser von wenigen Millimetern, vorzugsweise 0,2 - 3 mm, zu formen.

Die Bearbeitung der Glasbehälter 2 erfolgt meist unter hohen Temperaturen. Darum sollte das Werkzeug 12 warmfest sein. Das Werkzeug 12 kann vorzugsweise aus einem Metall oder einer Metalllegierung geformt sein. Beispielsweise kann das Werkzeug Wolfram aufweisen, wodurch es insbesondere bei den vorherrschenden hohen Temperaturen noch relativ verschleißfest ist.

Der sich in der Betriebsstellung 20 befindliche Werkzeughalter 16 kann von dem Führungsrohr 10 aus der Werkzeughalteraufnahme 14 herausgehoben werden, so dass das Werkzeug 12 in den Glasbehälter 2 eingesteckt wird und sich im Wesentlichen senkrecht zur axialen Richtung mittig zwischen zwei als Umformwerkzeuge 8 dienende Formrollen 64 angeordnet ist.

Hierfür ist das Führungsrohr 10 in axialer Richtung A durch die Durchstecköffnung 22 beweglich gehalten. Insbesondere kann das Führungsrohr 10 zwischen einer Freigabestellung 66, in der das Führungsrohr 10 auf einer Seite der Werkzeugwechselvorrichtung 1 angeordnet ist und die Werkzeugwechselvorrichtung 1 frei beweglich ist (siehe Fig. 2), und einer Arbeitsstellung 68, in der das Führungsrohr 10 die Durchstecköffnung 22 der in der Betriebsstellung 20 positionierten Werkzeughalteraufnahme 14 durchragt und den Werkzeughalter 16 aus der Werkzeughalteraufnahme 14 heraushebt, beweglich sein.

Das Führungsrohr 10 wird über einen Kloben 70, einer Schraube 72, einer Lasche 74, einer Buchse 76 und einem Hebel 78 von einem Hubmotor 80 in axialer Richtung A nach oben und unten bewegt.

Vorzugsweise kann das Führungsrohr 10 mit dem Werkzeughalter 16 zumindest in der Arbeitsstellung 68 starr verbunden sein, so dass eine relative Bewegung des Werkzeughalters 16 zum Führungsrohr 10 während des Formgebungsprozesses ausgeschlossen werden kann. Folglich können Fehlfunktionen der Formeinrichtung 100, beispielsweise aufgrund von einer falschen Positionierung des Werkzeugs 12 relativ zum zu bearbeitenden Glasbehälter 2, vermieden werden.

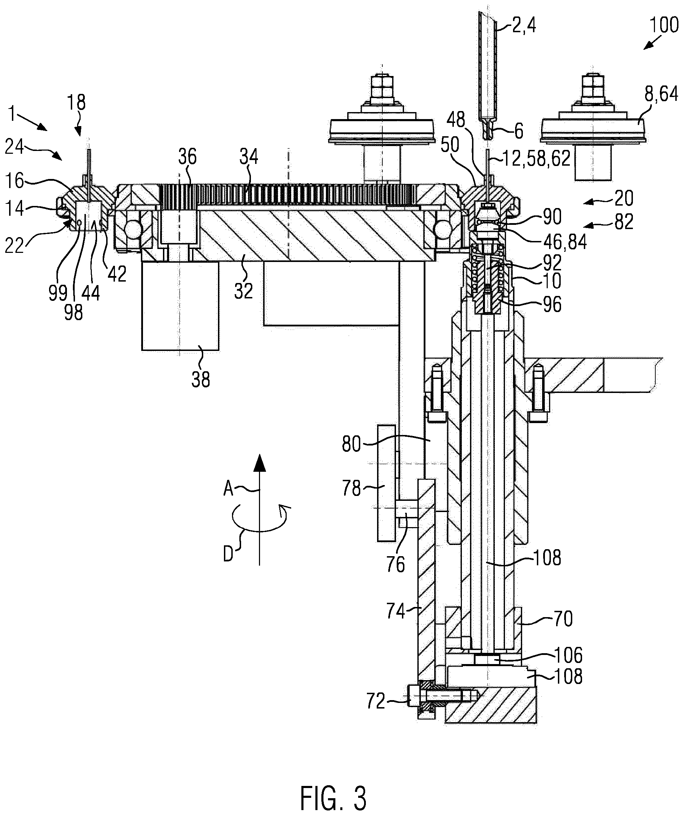

Das Führungsrohr 10 kann hierfür in eine sich zwischen Freigabestellung 66 und Arbeitsstellung 68 befindliche Kopplungsstellung 82 (siehe Fig. 3), in der das Führungsrohr 10, insbesondere das Ende 46 des Führungsrohrs 10, in die Aufnahme 44 des Werkzeughalters 16 eingeführt ist und sich an den Werkzeughalter 16 ankoppelt, beweglich sein. Hierfür können Werkzeughalter und Führungsrohr eine Kopplungsanordnung bilden.

In einer bevorzugten Ausführungsform kann das Führungsrohr 10 an seinem zur Werkzeugwechselvorrichtung 44- 1 gewandten Ende 46 mit einem Zentrierspanner 84 versehen sein. Der Zentrierspanner 84 sorgt bei der Kopplung für eine automatische konzentrische Anordnung des Werkzeughalters 16 und des Führungsrohres 10. Folglich ist beim Einsetzen des Werkzeughalters 16 in die Werkzeughalteraufnahme 14 nicht mehr länger auf die genaue Positionierung des Werkzeughalters 16 in der Werkzeughalteraufnahme 14 zu achten. Demnach verringert sich der Aufwand beim Einsetzen des Werkzeughalters 16 in die Werkzeughalteraufnahme 14, wobei zugleich eine hohe Wechselgenauigkeit des Werkzeugs 12 hinsichtlich der Konzentrizität erreicht wird.

Zur Verbesserung der Produktionseffizienz und Vereinfachung des Werkzeugwechsels ist es wünschenswert, dass die Ausrichtung des Werkzeugs 12 in der Arbeitsstellung 68 über das Führungsrohr 10 bestimmt wird. Eine schnelle und eine den Werkzeughalter bezüglich des Führungsrohrs 10 zentrierende Kopplung kann also durch den Zentrierspanner 84, der das Ende 46 bildet, erreicht werden.

Der Zentrierspanner 84 besteht aus einem oberen Konus 86, einem unteren Konus 88 und zwischen oberem Konus 86 und unterem Konus 88 angeordneten Zentrierkugeln 90. Der obere Konus 86 ist über eine Zugstange 92 und einem an einer Druckfeder 94 gelagerten Zuganker 96 beweglich gegenüber dem unteren Konus 88 gehalten.

Soll der Zentrierspanner 84 nun an den Werkzeughalter 16 ankoppeln, drückt die Druckfeder 94 über den Zuganker 96 und der Zugstange 92 den oberen Konus 86 nach unten in axialer Richtung A zum unteren Konus 88, wodurch die Zentrierkugeln 90 gleichmäßig nach außen und dabei schräg nach unten gedrückt werden. Dabei drücken die Zentrierkugeln 90 in entsprechend an einer radial nach innen weisenden Wand 98 der Aufnahme 44 in Umfangsrichtung voneinander beabstandete Vertiefungen 99 in der Art, dass der Werkzeughalter 14 sowohl zentrisch positioniert wird, als auch in axialer Richtung A nach unten zum Führungsrohr gedrückt wird. Dabei legt sich eine untere Stirnfläche 102 des Werkzeughalters 16 auf eine obere Stirnfläche 104 des Führungsrohrs 10. Durch die erzeugte formschlüssige Verbindung in axialer Richtung A durch die Zentrierkugeln 90 und die kraftschlüssige Verbindung an der Plananlage in den Vertiefungen 99 ergibt sich eine sehr hohe Wechselgenauigkeit sowohl hinsichtlich der Konzentrizität als auch hinsichtlich der axialen Positioniergenauigkeit. Zusätzlich ergibt sich eine genaue Rotationslage des Werkzeughalters 16, wenn die Vertiefungen 99 entsprechend der Zentrierkugeln 90 ausgeformt sind und nicht als in Umfangsrichtung durchgehende Nut.

Zum Lösen der Spannung fährt ein Kolben 106 eines Pneumatikzylinders 108 in axialer Richtung A nach oben und drückt über eine Druckstange 110, den Zuganker 96 und der Zugstange 92 den oberen Konus 86 nach oben in axialer Richtung A weg von dem unteren Konus 88, wodurch sich die Zentrierkugeln 90 wieder radial nach innen bewegen. Dabei werden die Zentrierkugeln 90 durch eine Ringfeder (nicht gezeigt) nach innen gezogen.

Aufgrund des Hubs des Zentrierspanners 84 kann eine lichte Weite 112 der Aufnahme des Werkzeughalters 16 gegenüber dem Zentrierspanner 84 im entspannten Zustand überdimensioniert sein. Ist die lichte Weite der Aufnahme beispielsweise 2 mm größer gestaltet als der Außendurchmesser des Zentrierspanners im entspannten Zustand, kann der Werkzeughalter bis zu 1 mm außermittig in der Werkzeughalteraufnahme stehen, ohne mit dem Zentrierspanner zu kollidieren. Bei der Kopplung drücken die Zentrierkugeln gegen die radial nach innen weisende Innenwand der Aufnahme und richtet den Werkzeughalter konzentrisch zum Zentrierspanner und damit auch zum Führungsrohr aus.

Bei der in den Figuren gezeigten Ausführungsform kann ein Werkzeugwechsel wie nachfolgend beschrieben im laufenden Betrieb erfolgen.

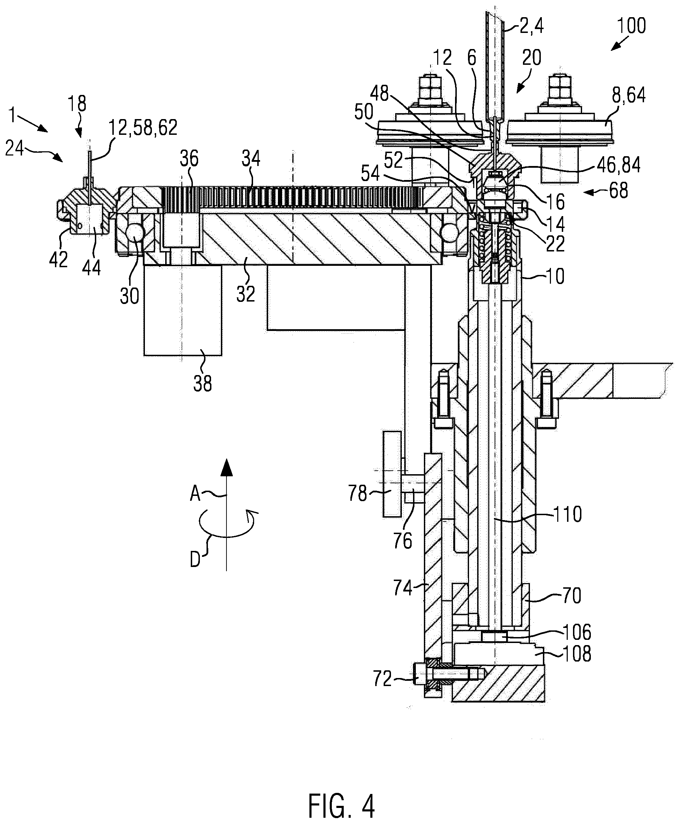

In der Arbeitsstellung 68 wird der sich in der Betriebsstellung 20 befindliche Werkzeughalter von dem Führungsrohr 10 aus der Werkzeughalteraufnahme 16 herausgehoben (siehe Fig. 4). Das in der Halterung 48 befestigte Werkzeug 12 kann dabei in dem Glasbehälter 2 eingesteckt sein, so dass, wenn die Formrollen 64 von außen gegen den Konus des Glasbehälters drücken, über das Werkzeug 12 die Innenform des Konus ausgeformt wird.

In den sich in den Bestückungs- und Entnahmestellungen 18 befindlichen Werkzeughalteraufnahmen 14 können währenddessen bereits weitere Werkzeughalter 16 mit neuen Werkzeugen 12 eingesetzt werden. Soll nun ein Werkzeugwechsel initiiert werden, fährt das Führungsrohr 10 in die Kopplungsstellung 82 (siehe Fig. 3). In dieser Stellung wird durch den Pneumatikzylinder 108 die Aufspannung des Werkzeughalters 16 gelöst und dieser dadurch freigegeben. Anschließend fährt das Führungsrohr 10 in die Freigabestellung 66 (siehe Fig. 2), so dass der Werkzeugrevolver 24, insbesondere der Magazinring 26 sich frei drehen kann. Der Magazinring 26 wird daraufhin um eine Rotationsposition in Drehrichtung D weitergedreht, so dass gleichzeitig eine Werkzeughalteraufnahme 16 in die Betriebsstellung 20 und eine andere Werkzeughalteraufnahme 16 in die Bestückungs- und Entnahmestellung 18 bewegt wird.

Folglich ist nun ein Werkzeughalter 16 mit einem neuen Werkzeug 12 in der sich in der Betriebsstellung 20 befindlichen Werkzeughalteraufnahme 14 eingesetzt. Das Führungsrohr 10 kann nun wieder in die Kopplungsstellung 82 gefahren werden, in welcher der Kolben 106 des Pneumatikzylinders 108 wieder nach unten gefahren wird. Demnach drückt die Druckfeder 94 gegen den Zuganker 96, so dass der über die Zugstange 92 mit dem Zuganker 96 verbundene obere Konus 86 in axialer Richtung A zum unteren Konus 88 hin gezogen wird. Dadurch wird der Werkzeughalter 16 gespannt und sowohl in axialer Richtung A als auch konzentrisch ausgerichtet. Nach dem Spannen des Werkzeughalters 16 wird das Führungsrohr 10 wieder in die Arbeitsstellung 68 gefahren.

Das zuvor beanspruchte Werkzeug kann nun in aller Ruhe ohne Ausschalten der Formeinrichtung oder Stoppen des Formgebungsprozesses ausgetauscht werden.

Der Wechsel des Werkzeugs kann zyklisch oder auch durch manuellen Eingriff erfolgen. In einer nicht gezeigten Ausgestaltung kann eine Sensoreinheit vorgesehen sein, die den Zustand des Werkzeugs kontinuierlich überprüft. So kann im Falle eines vorzeitigen Ausfalls des Werkzeugs 12, zum Beispiel durch Abbrechen oder übermäßigen Verschleiß, ein vorzeitiger Werkzeugwechsel initiiert werden. Die Überprüfung des Werkzeugs 12 kann dabei bevorzugt durch einen optischen Sensor realisiert werden, beispielsweise durch eine Laserlichtschranke.

### Bezugszeichen

- 1: Werkzeugwechselvorrichtung
- 2: Glasbehälter
- 4: Spritze
- 6: Spritzenkonus
- 8: Umformwerkzeug
- 10: Führungsrohr
- 12: Werkzeug
- 14: Werkzeughalteraufnahme
- 16: Werkzeughalter
- 18: Bestückungs- und Entnahmestellung
- 20: Betriebsstellung
- 22: Durchstecköffnung
- 24: Werkzeugrevolver
- 26: Magazinring
- 28: Flachseite
- 30: Kugellager
- 32: Grundplatte
- 34: Innenverzahnung
- 36: Ritzel
- 38: Antrieb
- 40: Kodierungselement
- 42: Schaft
- 44: Aufnahme
- 46: Ende
- 48: Halterung
- 50: Kopf
- 52: Auflagefläche
- 54: Gegenfläche
- 56: Öffnung
- 58: Dorn
- 62: Formdraht
- 64: Formrollen
- 66: Freigabestellung
- 68: Arbeitsstellung
- 70: Kloben
- 72: Schraube
- 74: Lasche
- 76: Buchse
- 78: Hebel
- 80: Hubmotor
- 82: Kopplungsstellung
- 84: Zentrierspanner
- 86: oberer Konus
- 88: unterer Konus
- 90: Zentrierkugel
- 92: Zugstange
- 94: Druckfeder
- 96: Zuganker
- 98: Wand
- 99: Vertiefung
- 100: Formeinrichtung
- 102: untere Stirnfläche
- 104: obere Stirnfläche
- 106: Kolben
- 108: Pneumatikzylinder
- 110: Druckstange
- 112: lichte Weite
- A: axiale Richtung
- D: Drehrichtung

## Patentansprüche

1. Werkzeugwechselvorrichtung (1) für eine Formeinrichtung (100) zur Formgebung von Glasbehältern (2), insbesondere von Spritzen, Karpulen oder Injektionsfläschchen, wobei die Werkzeugwechselvorrichtung (1) wenigstens zwei Werkzeughalteraufnahmen (14) zur Aufnahme eines jeweiligen Werkzeughalters (16) umfasst, wobei die wenigstens zwei Werkzeughalteraufnahmen (14) von wenigstens einer Bestückungs- und Entnahmestellung (18) in eine Betriebsstellung (20) beweglich sind, und wobei eine der wenigstens zwei Werkzeughalteraufnahmen (14) sich dann in einer Bestückungs- und Entnahmestellung (18) befindet, wenn eine andere der wenigstens zwei Werkzeughalteraufnahmen (14) in der Betriebsstellung (20) angeordnet ist, und wobei die wenigstens zwei Werkzeughalteraufnahmen (14) mit jeweils einer Durchstecköffnung (22) versehen ist.

2. Werkzeugwechselvorrichtung (1) nach Anspruch 1, wobei die Werkzeugwechselvorrichtung (1) einen in einer Drehrichtung (D) drehbaren Werkzeugrevolver (24) aufweist, an dem die wenigstens zwei Werkzeughalteraufnahmen (14) in Drehrichtung (D) voneinander beabstandet angeordnet sind.

3. Werkzeugwechselvorrichtung (1) nach Anspruch 1 oder 2, wobei die wenigstens zwei Werkzeughalteraufnahmen (14) jeweils mit einem Kodierungselement (40) versehen sind zum Festlegen der Ausrichtung des Werkzeughalters (16) in einer Umfangsrichtung relativ zur jeweiligen Werkzeughalteraufnahme (14).

4. Werkzeugwechselvorrichtung (1) nach einem der Ansprüche 1 bis 3, mit einem Werkzeughalter (16), der in eine der wenigstens zwei Werkzeughalteraufnahmen (14) eingesetzt ist, wobei der Werkzeughalter (16) aus der Werkzeughalteraufnahme (14) herausschiebbar ist.

5. Werkzeughalter (16) für eine Werkzeugwechselvorrichtung (1) nach einem der Ansprüche 1 bis 4, wobei der Werkzeughalter (16) einen Schaft (42) mit einer Aufnahme (44) für ein Ende (46) eines Führungsrohrs (10) und eine der Aufnahme (44) gegenüberliegende Halterung (48) zur austauschbaren Befestigung eines Werkzeugs (12) aufweist.

6. Werkzeughalter (16) nach Anspruch 5, wobei die Aufnahme (44) eine radial nach innen weisende Wand mit in Umfangsrichtung voneinander beabstandeten Vertiefungen oder Bohrungen (99) aufweist.

7. Werkzeughalter (16) nach Anspruch 5 oder 6, mit einem in der Halterung (48) austauschbar befestigten Werkzeug (12), das zum Ausformen einer Innenform des Glasbehälters ausgebildet ist.

8. Werkzeughalter (16) nach Anspruch 7, wobei das Werkzeug (12) ein Dorn (58) ist.

9. Formeinrichtung (100) zur Formgebung von Glasbehältern (2), insbesondere von Spritzen, Karpulen oder Injektionsfläschchen, wobei die Formeinrichtung (100) eine Werkzeugwechselvorrichtung (1) nach einem der Ansprüche 1 bis 4, Umformwerkzeuge (8) zur Herstellung einer Außenform des Glasbehälters (2) und ein Führungsrohr (10) umfasst, wobei das Führungsrohr (10) koaxial zur Durchstecköffnung einer sich in der Betriebsstellung (20) befindlichen Werkzeughalteraufnahme (14) angeordnet ist, wobei die Werkzeugwechselvorrichtung (1) zwischen den Umformwerkzeugen (8) und dem Führungsrohr (10) angeordnet ist und das Führungsrohr (10) axial durch die Durchstecköffnung (22) beweglich ist.

10. Formeinrichtung (100) nach Anspruch 9, wobei das Führungsrohr an seinem zur Werkzeughalteraufnahme (14) gerichteten Ende mit einem Zentrierspanner (84) versehen ist.

11. Formeinrichtung (100) nach Anspruch 9 oder 10, wobei ein Werkzeughalter (16) mit einem Werkzeug (12) zum Ausformen einer Innenform des Glasbehälters (2) in der sich in der Betriebsstellung (20) befindlichen Werkzeughalteraufnahme (14) eingesetzt ist, und wobei der Werkzeughalter (16) in einer Arbeitsstellung (68) von dem Führungsrohr (10) aus der Werkzeughalteraufnahme (14) herausgehoben ist.

12. Formeinrichtung (100) nach Anspruch 11, wobei der Werkzeughalter (16) in der Arbeitsstellung (68) rotationsstarr mit dem Führungsrohr (10) verbunden ist.

13. Formeinrichtung (100) nach einem der Ansprüche 9 bis 12, wobei die Formeinrichtung (100) eine Sensoreinrichtung zum Überprüfen des Zustands des Werkzeugs (12) aufweist.

14. Formeinrichtung (100) nach Anspruch 13, wobei die Sensoreinrichtung einen optischen Sensor aufweist.

15. Verfahren zur Formgebung eines Glasbehälters wie einer Spritze, Karpule oder Injektionsflasche, wobei ein Werkzeughalter (16) mit einem Werkzeug (12) zur Ausformung einer Innenform des Glasbehälters (2) in eine Betriebsstellung (20) und gleichzeitig ein anderer Werkzeughalter (16) in eine Bestückungs- und Entnahmestellung (18) bewegt wird.

16. Verfahren nach Anspruch 15, wobei während der Formgebung des Glasbehälters ein Werkzeughalter (16) mit einem Werkzeug (12) zur Ausformung der Innenform des Glasbehälters (2) in der sich in der Bestückungs- und Entnahmestellung befindlichen Werkzeughalteraufnahme (14) eingesetzt wird.
